# EUROPEAN PATENT APPLICATION

(11) **EP 3 954 924 A1**
(43) Date of publication of application: **16.02.2022**
(21) Application number: 20787312.6
(22) Date of filing: 03.04.2020
(51) Int. Cl.: F16H 3/64

(54) **GEARBOX WITH MULTIPLE PLANETARY GEAR SETS HAVING SAME TYPE OF CENTRAL GEAR**

(30) Priority: 07.04.2019 CN 201910273895
(71) Applicant: Luo, Can, Kunming, Yunnan 650000 (CN)
(72) Inventor: Luo, Can, Kunming, Yunnan 650000 (CN)
(74) Representative: Proi World Intellectual Property GmbH
(86) International application number: PCT/CN2020/083140
(87) International publication number: WO 2020/207340

(57) **Abstract**

A gearbox with multiple planetary gear sets having the same type of center gears includes a planetary gear set, a planetary gear set structure, an input end, an output end and a locking end, and brakes (8). The gearbox adopts at least three planetary gear sets having the same type of center gears (sun gears) or three planetary gear sets having the same type of center gears (ring gears) to form a star-connected planetary gear set structure. A planet carrier (7) is used as the input end, any of the center gears (1) is used as the output end, and the remaining center gears (2, 3) are each used as a locking end. The gearbox adopts at least two brakes (8), each of the brakes (8) connected to a locking end. The brakes (8) are controlled by a gear shift control device to be in any of a braking state, a half-braking state and a non-braking state. The gearbox controls the gear by controlling the braking of the brakes (8).

## Description

### TECHNICAL FIELD

The present invention relates to a gearbox with multiple planetary gear sets, and in particular to a gearbox with multiple planetary gear sets that adopts a star-connected planetary gear set structure with at least three planetary gear sets having the same type of center gears and controlling gears by controlling brakes.

### BACKGROUND

In order to convert torque and speed, many transmission systems are equipped with gearboxes with multiple planetary gear sets. The planetary gear sets, the planetary gear set structures, the input ends, the output ends and the locking ends, and the controllers used in different gearboxes with multiple planetary gear sets have their own technical characteristics. The transmission structure of the existing gearbox with multiple planetary gear sets is complicated, and the control structure is complicated by controlling multi-plate clutches, brakes, and one-way clutches to shift gears. Previously, the inventor invented a gearbox with multiple planetary gear sets that controls gears by controlling the brakes, in which the control structure is simple, an ordinary planetary gear set and a star-connected planetary gear set structure are adopted, and the transmission structure is relatively simple. The machinery industry needs a gearbox with multiple planetary gear sets with a simpler transmission structure and a simple control structure that controls the gears by controlling the braking of the brakes. The present invention proposes such a gearbox with multiple planetary gear sets.

The gearbox with multiple planetary gear sets includes: internal structures of the planetary gear sets, namely the adopted planetary gear sets, the structure formed by interconnecting the planetary gear sets, namely the planetary gear set structure, the input end, the output end and the locking end, the controller of the gearbox, and so on.

An ordinary complete planetary gear set consists of three components: a sun gear, a ring gear and a planet carrier with a planetary gear. Axes of the sun gear and the ring gear are both central axes of the planetary gear set. The sun gear is a kind of center gear. The ring gear is another kind of center gear. Planetary gear sets are divided into single-layer star planetary gear sets and double-layer star planetary gear sets, each with its own laws of motion. The single-layer planetary gear set has only single-layer planetary gears, and the number of planetary gears is equal to the number of planetary gear groups. From the inside to the outside of the complete single-layer start planetary gear set, the sun gear meshes with the single-layer planetary gear, and the single-layer planetary gear meshes with the ring gear. The size of the components of the planetary gear set is enlarged and reduced in proportion, and its laws of motion remain unchanged. A plurality of planetary gear sets are interconnected to form a planetary gear set structure. A component in the planetary gear set structure that has a rotation speed is a rotating member, and several components connected to each other to have the same rotation speed belong to the same rotating member. The star-connected planetary gear set structure is as follows: for multiple single-layer star planetary gear sets, the number of planetary gear groups is set to be the same, the size of the planetary gear sets is adjusted, in which some are enlarged in proportion and some are reduced in proportion, until a distance between a planetary gear axis in each planetary gear set and the central axis of the planetary gear set is equal. Each planetary gear of a planetary gear set is aligned with a planetary gear axis of an adjacent planetary gear and they are connected in group. This connection is referred to as a star connection, and the star connection enables the planetary gear sets participating in the connection to have the same speed, and the planet carriers participating in the connection to have another same speed. The planetary gear set structure formed by the star connection of the planetary gear sets is a star-connected planetary gear set structure. According to actual needs, each single-layer star planetary gear set in the star-connected planetary gear set structure can omit one of the sun gear or the ring gear, and become an incomplete single-layer star planetary gear set. An incomplete single-layer star planetary gear set only has a center gear and a planet carrier with a planetary gear. The planetary gear sets adopted in the present invention are incomplete single-layer start planetary gear sets, and they are planetary gear sets having the same type of center gears. There are two types. In a first type, the planetary gear set omit the ring gear, and is referred to as a planetary gear set having the same type of center gears (sun gears), and from the inside to the outside of the planetary gear sets, the sun gear meshes with the single-layer planetary gear. In a second type, the planetary gear set omits the sun gear and is referred to as a planetary gear set having the same type of center gears (ring gears), and from the inside to the outside of the planetary gear set, the single-layer planetary gear meshes with the ring gear.

### SUMMARY

In order to design and manufacture a gearbox with multiple planetary gear sets with a simpler transmission structure and a simple control structure for controlling gears by controlling the braking of brakes, the present invention proposes a gearbox with multiple planetary gear sets having the same type of center gears. The gearbox includes a planetary gear set, a planetary gear set structure, an input end, an output end and a locking end, and brakes. Features of various aspects are described as below.

The planetary gear set is as follows: at least three planetary gear sets having the same type of center gears are adopted, and each planetary gear set is an incomplete single-layer star planetary gear set and is provided with a center gear and a planet carrier with a planetary gear; all the center gears in the planetary gear sets are either sun gears or ring gears, and all the center gears in the gearbox are the same type of center gears; the planetary gear sets having the same type of center gears include a planetary gear set having the same type of center gears (sun gears) and a planetary gear set having the same type of center gears (ring gears), a planetary gear set having the same type of center gears all of which are sun gears is referred to as a planetary gear set having same type of center gears (sun gears), and a planetary gear having the same type of center gears all of which are ring gears is referred to as a planetary gear set having the same type of center gears (ring gears). One of them is selected to constitute the gearbox of the present disclosure. For example, a planetary gear set having the same type of center gears (sun gears) is selected to form a gearbox with a planetary gear set having the same type of center gears (sun gears), and a planetary gear set having the same type of center gears (ring gears) is selected to form a gearbox with a planetary gear set having the same type of center gears (ring gears). In the present invention, the concept of "planetary gear set" includes components of the planetary gear set and parts of the components, including meshing, transmission, support, arrangement and positional relationships among the components and the parts, including construction, omission and parameter settings of the components and the parts.

The planetary gear set structure is a star-connected planetary gear set structure, in which for multiple single-layer star planetary gear sets, the number of planetary gear groups is set to be the same, the size of the planetary gear sets is adjusted until a distance between a planetary gear axis and a central axis of the planetary gear set in each planetary gear set is equal, each planetary gear in a planetary gear set is aligned with a planetary gear axis of an adjacent planetary gear set and they are connected in group, such a connection is referred to as a star connection, and such a planetary gear set structure is referred to as a star-connected planetary gear set structure. The planet carriers of the planetary gear sets in the star-connected planetary gear set structure together form a rotating member, and the center gears of the planetary gear sets are each a rotating member. In the present invention, the "planetary gear set structure" is a specific term, and its concept includes connections among the planetary gear sets, and also includes the planetary gear sets as connected and the components and parts of the planetary gear sets as connected, such as the planetary gear sets, such as rotating members, planetary gears participating in the star connection, etc.

The input end, the output end and the locking end are as follows: the planet carrier is used as the input end to connect to a power device, any of the center gears is used as the output end to connect to a powered device, and the remaining center gears are each used as a locking end to connect to a brake, and the brake is controlled by a gear shift control device. If a brake is controlled to brake, the center gear connected thereto will be locked, such that the rotation speed of the center gear is zero. If a brake is controlled not to brake, the center gear connected thereto will not be locked.

The brakes are as follows: at least two brakes are used as a controller of the gearbox, each connected to a locking end. Brakes belong to mature technologies, such as mechanical brakes, electromagnetic brakes, and power-assisted brakes. The brake includes a stator and a mover, in which the stator is connected with a fixed object, and the mover is connected with a locking end. The brake can be controlled to be in any of a braking state, a half-braking state and a non-braking state. According to mechanical principles, a clutch with one end connected to a fixed object such as a base is also taken as a brake.

In the star-connected planetary gear set structure according to the present invention, each rotating member serves as the input end, the output end and the locking end, and no rotating member is redundant, which proves that the transmission structure according to the present invention is simple. An ordinary complete planetary gear set can only be assembled axially, which is in contradiction with the star-connected planetary gear set structure, and would be difficult to assemble. The present invention adopts an incomplete planetary gear set, in which each planetary gear set can be assembled both radially and axially, and the assembly is simple; and the overall planetary gear set structure can also be assembled radially, which expands the assembly method of the gearbox with multiple planetary gear sets. An ordinary gearbox with multiple planetary gear sets performs gear shift by controlling multi-plate clutches, brakes, and one-way clutches, and is actuated by a hydraulic control mechanism, and the control structure is complicated. In the present invention, the gear is controlled entirely by controlling the braking of the brakes, the hydraulic control mechanism may not be adopted, and the control structure is simple.

The operating characteristics of the gearbox according to the present invention are as follows: a brake is controlled to brake such that the speed of the center gear connected thereto is zero; when the input end inputs a rotation speed, a brake is controlled to brake, the output end forms an output rotation speed which has a definite proportional relationship with the input rotation speed, and the gearbox forms a transmission ratio corresponding to a gear; when another brake is controlled to brake, the output end forms another output rotation speed which has another definite proportional relationship with the input rotation speed, and the gearbox forms another transmission ratio corresponding to another gear; and so on. The gearbox controls the gear by controlling the braking of the brakes. When a brake is controlled to brake half, the gearbox is in a half-linkage state in the corresponding gear; when the brakes are controlled to not brake, the gearbox is in neutral; and when two or more brakes are controlled to brake, the gearbox stops operating. The transmission ratio is a ratio of the input rotation speed to the output rotation speed. When the transmission ratio is a positive value, the input rotation speed and the output rotation speed have the same direction. When the transmission ratio is a negative value, the input rotation speed and the output rotation speed have opposite directions.

A direct connection means that rotational speeds of connected objects are the same through a mechanical connection, and an indirect connection means that rotational speeds of two transmitted objects are deterministically related through mechanical transmission. A separate "connection" generally refers to a direct connection, and an indirect connection will be specifically stated. In the planetary gear sets, a relationship between the planet carrier and the planetary gear is as follows: one is a shaft, and the other is a bearing. The number of gear teeth of the components in the planetary gear sets is determined according to actual needs, and the gear modulus of the components of a planetary gear set does not have to be the same as the gear modulus of the components of other planetary gear sets. The input end and the power device may be connected to each other through a direct connection or an indirect connection with a rangefinder gear. The output end and the powered device may be connected to each other through a direct connection or an indirect connection with the rangefinder gear. The transmission ratio of the direct connection is 1.0. The transmission ratio of the indirect connection is generally negative, such as -1.0. The power device adopts mature technology, such as an electric power device, a steam power device or a fuel power device. The gear shift control device adopts mature technology, such as an electric control mechanism, a mechanical control mechanism or a hydraulic control mechanism. The multi-layer quill shaft is a mature technology, in which the bearing and the shaft and the shafts of the layers can rotate relative to each other, but do not slide relative to each other in an axial direction. The bearing is a mature technology. The bearing supports the shaft. The bearing and the shaft can rotate relative to each other, but they do not slide relative to each other in an axial direction. The brake is a mature technology. The gear shift control device of the gearbox according to the present invention is actuated by the stator of the brake, and a hydraulic control mechanism may not be used. The multi-plate clutch is a mature technology. In a traditional gearbox, the multi-plate clutch contains two independent movers. Since the gear shift control device is actuated by the mover, a hydraulic control mechanism must be adopted. The hydraulic control mechanism is a kind of gear shift control device and has a complicated structure.

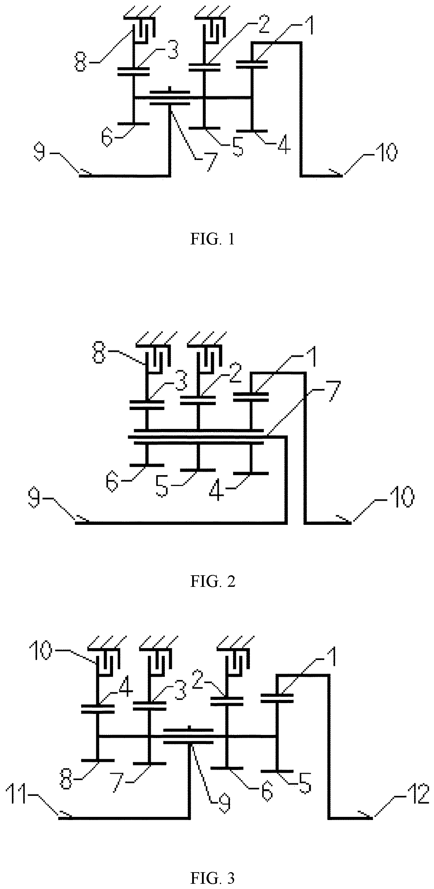

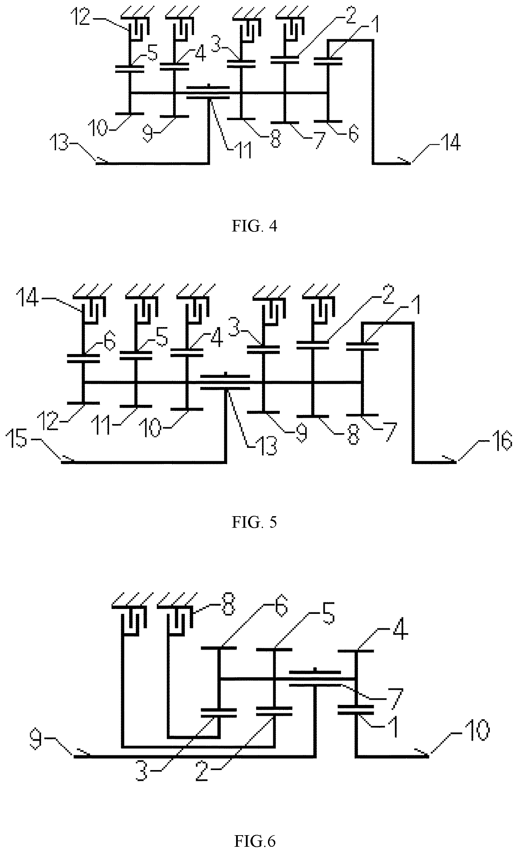

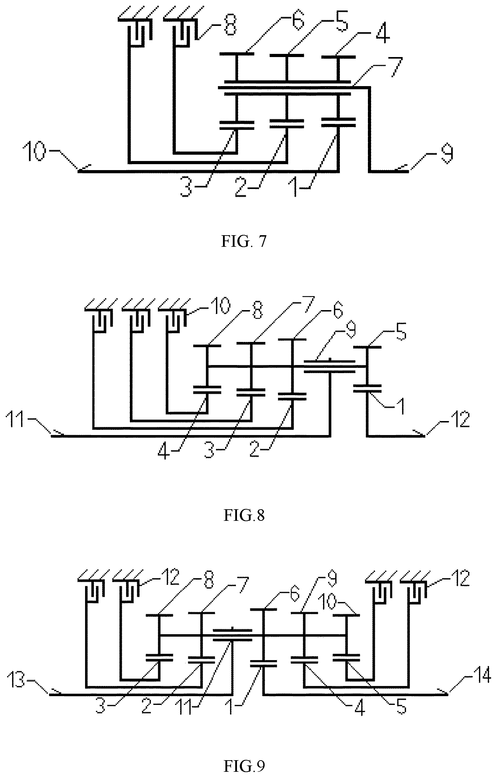

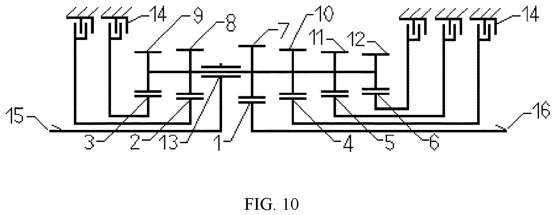

In FIGS. 1 to 5, planetary gear sets having the same type of center gears (ring gears) are shown. FIGS. 1 and 2 show three planetary gear sets. FIG. 3 shows four planetary gear sets. FIG. 4 shows five planetary gear sets. FIG. 5 shows six planetary gear sets. A difference between FIGS. 1 and 2 is that the planet carrier is a bearing and the planetary gear is a shaft in FIG. 1; and the planet carrier is a shaft and the planetary gear is a bearing in FIG. 2. Another difference between FIGS. 1 and 2 is that the input end, the output end, and the locking end are arranged in a different order. In FIGS. 6 to 10, planetary gear sets having the same type of center gears (sun gears) are shown. FIGS. 6 and 7 show three planetary gear sets. FIG. 8 shows four planetary gear sets. FIG. 9 shows five planetary gear sets. FIG. 10 shows six planetary gear sets. A difference between FIGS. 6 and 7 is that the planet carrier is a bearing and the planetary gear is a shaft in FIG. 6; and the planet carrier is a shaft and the planetary gear is a bearing in FIG. 7. Another difference between FIGS. 6 and 7 is that the input end, the output end, and the locking end are arranged in a different order. The bearings in the figures only illustrate the supporting principle, and do not reflect the actual number and actual size of the bearings.

The number of gears of the gearbox according to the present invention is equal to the number of brakes, which is equal to the number of planetary gear sets minus one. Therefore, the number of planetary gear sets is specifically set according to the actual required number of gears of the gearbox. The transmission ratio of each gear of the gearbox according to the present invention depends on the number of center gear teeth and the number of planetary gear teeth of each planetary gear set used. Therefore, the number of center gear teeth and the number of planetary gear teeth of each planetary gear set are specifically set according to the actual required transmission ratio of each gear. The number of planetary gear sets is specifically set according to the actual torque to be transmitted by the gearbox and the number of teeth of each center gear. The gearbox obtained through these specific settings does not change the characteristics of the present invention, and all belong to the scope of protection of the present invention. Structural diagrams of the gearbox according to the present invention with no more than six planetary gear sets are shown in FIGS. 1 to 10, and the specific settings is demonstrated in embodiments. The structure diagrams of the gearbox according to the present invention with more than six planetary gear sets can be deduced by analogy, and its specific settings can be deduced by analogy according to these embodiments, and will not be described in detail.

A new gearbox formed after swapping an input end and an output end of a gearbox while keeping all other structures unchanged is a reverse gearbox of the original gearbox. The number of gears of the reverse gearbox remains unchanged, and a transmission ratio of a gear of the reverse gearbox is a reciprocal of the transmission ratio of the original gear of the original gearbox. In the reverse gearbox of the gearbox according to the present invention, the planetary gear set is unchanged, the planetary gear set structure is unchanged, the brakes are unchanged, and the input end, the output end and the locking end are changed as follows: the planet carrier is used as the output end to connect to a powered device, any of the center gears is used as the input end to connect to a power device, and the remaining center gears are each used as a locking end to connect to a brake; and its operating characteristics remain unchanged. The reverse gearbox of the gearbox according to the present invention also belongs to the scope of protection of the present invention.

The characteristics of the planetary gear set, the planetary gear set structure, the input end, the output end and the locking end, and the brakes, as well as the operation characteristics and the characteristics of the reverse gearbox are innovations of the present invention. Prior to the present invention, there was no gearbox with multiple planetary gear sets having the same characteristics in the industry.

The advantages of the gearbox with multiple planetary gear sets having the same type of center gears according to the present invention are as follows: it is proposed to adopt at least three planetary gear sets having the same type of center gears, a star-connected planetary gear set structure is proposed, and an input end, an output end and a locking end are proposed, which has a simpler transmission structure than the existing gearbox with multiple planetary gear sets, and expands the assembly method of the gearbox with multiple planetary gear sets. It is proposed to control the gear by controlling the braking of the brakes, which is simpler than the control structure of the existing gearbox with multiple planetary gear sets.

### BRIEF DESCRIPTION OF THE DRAWINGS

FIG. 1 is a schematic diagram of a gearbox with three planetary gear sets having the same type of center gears (ring gears) according to the present invention. 1 represents a ring gear of a first planetary gear set, 2 represents a ring gear of a second planetary gear set, 3 represents a ring gear of a third planetary gear set, 4 represents a planetary gear of the first planetary gear set, 5 represents a planetary gear of the second planetary gear set, 6 represents a planetary gear of the third planetary gear set, 7 represents a planet carrier, 8 represents a brake (2 brakes are provided), 9 represents an input arrow, and 10 represents an output arrow.
FIG. 2 is a schematic diagram of a gearbox with three planetary gear sets having the same type of center gears (ring gears) according to the present invention. 1 represents a ring gear of a first planetary gear set, 2 represents a ring gear of a second planetary gear set, 3 represents a ring gear of a third planetary gear set, 4 represents a planetary gear of the first planetary gear set, 5 represents a planetary gear of the second planetary gear set, 6 represents a planetary gear of the third planetary gear set, 7 represents a planet carrier, 8 represents a brake (2 brakes are provided), 9 represents an input arrow, and 10 represents an output arrow.
FIG. 3 is a schematic diagram of a gearbox with four planetary gear sets having the same type of center gears (ring gears) according to the present invention. 1 represents a ring gear of a first planetary gear set, 2 represents a ring gear of a second planetary gear set, 3 represents a ring gear of a third planetary gear set, 4 represents a ring gear of a fourth planetary gear set, 5 represents a planetary gear of the first planetary gear set, 6 represents a planetary gear of the second planetary gear set, 7 represents a planetary gear of the third planetary gear set, 8 represents a planetary gear of the fourth planetary gear set, 9 represents a planet carrier, 10 represents a brake (3 brakes are provided), 11 represents an input arrow, and 12 represents an output arrow.
FIG. 4 is a schematic diagram of a gearbox with five planetary gear sets having the same type of center gears (ring gears) according to the present invention. 1 represents a ring gear of a first planetary gear set, 2 represents a ring gear of a second planetary gear set, 3 represents a ring gear of a third planetary gear set, 4 represents a ring gear of a fourth planetary gear set, 5 represents a ring gear of a fifth planetary gear set, 6 represents a planetary gear of the first planetary gear set, 7 represents a planetary gear of the second planetary gear set, 8 represents a planetary gear of the third planetary gear set, 9 represents a planetary gear of the fourth planetary gear set, 10 represents a planetary gear of the fifth planetary gear set, 11 represents a planet carrier, 12 represents a brake (4 brakes are provided), 13 represents an input arrow, and 14 represents an output arrow.
FIG. 5 is a schematic diagram of a gearbox with six planetary gear sets having the same type of center gears (ring gears) according to the present invention. 1 represents a ring gear of a first planetary gear set, 2 represents a ring gear of a second planetary gear set, 3 represents a ring gear of a third planetary gear set, 4 represents a ring gear of a fourth planetary gear set, 5 represents a ring gear of a fifth planetary gear set, 6 represents a ring gear of a sixth planetary gear set, 7 represents a planetary gear of the first planetary gear set, 8 represents a planetary gear of the second planetary gear set, 9 represents a planetary gear of the third planetary gear set, 10 represents a planetary gear of the fourth planetary gear set, and 11 represents a planetary gear of the fifth planetary gear set, 12 represents a planetary gear of the sixth planetary gear set, 13 represents a planet carrier, 14 represents a brake (5 brakes are provided), 15 represents an input arrow, and 16 represents an output arrow.
FIG. 6 is a schematic diagram of a gearbox with three planetary gear sets having the same type of center gears (sun gears) according to the present invention. 1 represents a sun gear of a first planetary gear set, 2 represents a sun gear of a second planetary gear set, 3 represents a sun gear of a third planetary gear set, 4 represents a planetary gear of the first planetary gear set, 5 represents a planetary gear of the second planetary gear set, and 6 represents a planetary gear of the third planetary gear set, 7 represents a planet carrier, 8 represents a brake (2 brakes are provided), 9 represents an input arrow, and 10 represents an output arrow.
FIG. 7 is a schematic diagram of a gearbox with three planetary gear sets having the same type of center gears (sun gears) according to the present invention. 1 represents a sun gear of a first planetary gear set, 2 represents a sun gear of a second planetary gear set, 3 represents a sun gear of a third planetary gear set, 4 represents a planetary gear of the first planetary gear set, 5 represents a planetary gear of the second planetary gear set, and 6 represents a planetary gear of the third planetary gear set, 7 represents a planet carrier, 8 represents a brake (2 brakes are provided), 9 represents an input arrow, and 10 represents an output arrow.
FIG. 8 is a schematic diagram of a gearbox with four planetary gear sets having the same type of center gears (sun gears) according to the present invention. 1 represents a sun gear of a first planetary gear set, 2 represents a sun gear of a second planetary gear set, 3 represents a sun gear of a third planetary gear set, 4 represents a sun gear of a fourth planetary gear set, 5 represents a planetary gear of the first planetary gear set, 6 represents a planetary gear of the second planetary gear set, 7 represents a planetary gear of the third planetary gear set, 8 represents a planetary gear of the fourth planetary gear set, 9 represents a planet carrier, 10 represents a brake (3 brakes are provided), 11 represents an input arrow, and 12 represents an output arrow.
FIG. 9 is a schematic diagram of a gearbox with five planetary gear sets having the same type of center gears (sun gears) according to the present invention. 1 represents a sun gear of a first planetary gear set, 2 represents a sun gear of a second planetary gear set, 3 represents a sun gear of a third planetary gear set, 4 represents a sun gear of a fourth planetary gear set, 5 represents a sun gear of a fifth planetary gear set, 6 represents a planetary gear of the first planetary gear set, 7 represents a planetary gear of the second planetary gear set, 8 represents a planetary gear of the third planetary gear set, 9 represents a planetary gear of the fourth planetary gear set, 10 represents a planetary gear of the fifth planetary gear set, 11 represents a planet carrier, and 12 represents a brake (4 brakes are provided), 13 represents an input arrow, and 14 represents an output arrow.
FIG. 10 is a schematic diagram of a gearbox with six planetary gear sets having the same type of center gears (sun gears) according to the present invention. 1 represents a sun gear of a first planetary gear set, 2 represents a sun gear of a second planetary gear set, 3 represents a sun gear of a third planetary gear set, 4 represents a sun gear of a fourth planetary gear set, 5 represents a sun gear of a fifth planetary gear set, 6 represents a sun gear of a sixth planetary gear set, 7 represents a planetary gear of the first planetary gear set, 8 represents a planetary gear of the second planetary gear set, 9 represents a planetary gear of the third planetary gear set, 10 represents a planetary gear of the fourth planetary gear set, 11 represents a planetary gear of the fifth planetary gear set, and 12 represents a planetary gear of the sixth planetary gear set, 13 represents a planet carrier, 14 represents a brake (5 brakes are provided), 15 represents an input arrow, and 16 represents an output arrow.

In each figure, the planetary gear set is shown as a half-schematic diagram according to the industry practice, the input and output are shown as arrows, and the brake is shown with the stator grounded. The components in each figure only show the structural relationship, and do not reflect the actual size.

### DETAILED DESCRIPTION

Embodiment 1: An example of a gearbox according to the present invention with three planetary gear sets having the same type of center gears (ring gears). The gearbox includes a planetary gear set, a planetary gear set structure, an input end, an output end and a locking end, and brakes, among others.

The planetary gear set is as follows: this embodiment adopts three planetary gear sets having the same type of center gears (ring gears). Each planetary gear set is provided with a center gear and a planet carrier with a planetary gear. The center gears in the planetary gear sets are all ring gears, which are the same type of center gears. The number of planetary gear groups in the three planetary gear sets is 4. The planetary gear is a shaft, and the planet carrier is a bearing. Note: If the planetary gear is changed to be a bearing and the planet carrier to a shaft, reference may be made to FIG. 2.

The planetary gear set structure is a star-connected planetary gear set structure. Suppose Zq1 represents the number of teeth of the ring gear in a first planetary gear set, Zq2 represents the number of teeth of the ring gear in a second planetary gear set, Zq3 represents the number of teeth of the ring gear in a third planetary gear set, X1 represents the number of teeth of the planetary gear in the first planetary gear set, X2 represents the number of teeth of the planetary gear in the second planetary gear set, and X3 represents the number of teeth of the planetary gear in the third planetary gear set. In this embodiment, the number of gear teeth of the components is determined as: Zq1=70, Zq2=62, Zq3=58, X1= 19, X2=17, and X3=16.

The input end, the output end and the locking end are as follows: a planet carrier (7) is used as the input end to connect to a power device. A ring gear (1) of the first planetary gear set is used as the output end to connect to a powered device. A ring gear (2) of the second planetary gear set and a ring gear (3) of the third planetary gear set are each used as a locking end to connect to a brake (8), as shown in FIG. 1.

The brakes are as follows: this embodiment adopts two brakes, each connected to a locking end. The brake is an electromagnetic brake and is controlled by a gear shift control device.

If a brake is controlled to brake, the center gear connected thereto will be locked, such that the rotation speed of the center gear is zero. If a brake is controlled not to brake, the center gear connected thereto will not be locked. When the brake (8) connected to the ring gear (3) of the third planetary gear set brakes, the transmission ratio is 62.222, which corresponds to a second gear. When the brake (8) connected to the ring gear (2) of the second planetary gear set brakes, the transmission ratio is 99.167, which corresponds to a first gear. When neither brake brakes, the gearbox is in neutral. The transmission ratios of the two gears of the gearbox in this embodiment are both very large, the transmission structure is simple, the control structure is simple, and the gears are controlled by controlling the braking of the two brakes. The gearbox in this embodiment may be used as a main reducer and a gearbox of a helicopter, and may develop a gear shift function of the helicopter.

Embodiment 2: An example of a gearbox according to the present invention with four planetary gear sets having the same type of center gears (ring gears). The gearbox includes a planetary gear set, a planetary gear set structure, an input end, an output end and a locking end, and brakes, among others.

The planetary gear set is as follows: this embodiment adopts four planetary gear sets having the same type of center gears (ring gears). Each planetary gear set is provided with a center gear and a planet carrier with a planetary gear. The center gears in the planetary gear sets are all ring gears, which are the same type of center gears. The number of planetary gear groups in the four planetary gear sets is 4. The planetary gear is a shaft, and the planet carrier is a bearing.

The planetary gear set structure is a star-connected planetary gear set structure. Suppose Zq1 represents the number of teeth of the ring gear in a first planetary gear set, Zq2 represents the number of teeth of the ring gear in a second planetary gear set, Zq3 represents the number of teeth of the ring gear in a third planetary gear set, Zq4 represents the number of teeth of the ring gear in a fourth planetary gear set, X1 represents the number of teeth of the planetary gear in the first planetary gear set, X2 represents the number of teeth of the planetary gear in the second planetary gear set, X3 represents the number of teeth of the planetary gear in the third planetary gear set, and X4 represents the number of teeth of the planetary gear in the fourth planetary gear set. In this embodiment, the number of gear teeth of the components is determined as: Zq1=82, Zq2=82, Zq3=78, Zq4=78, X1=33, X2=22, X3=19, and X4=17.

The input end, the output end and the locking end are as follows: a planet carrier (9) is used as the input end to connect to a power device. A ring gear (1) of the first planetary gear set is used as the output end to connect to a powered device. A ring gear (2) of the second planetary gear set, a ring gear (3) of the third planetary gear set, and a ring gear (4) of the fourth planetary gear set are each used as a locking end to connect to a brake (10), as shown in FIG. 3.

The brakes are as follows: this embodiment adopts three brakes, each connected to a locking end. The brake is an electromagnetic brake and is controlled by a gear shift control device.

If a brake is controlled to brake, the center gear connected thereto will be locked, such that the rotation speed of the center gear is zero. If a brake is controlled not to brake, the center gear connected thereto will not be locked. When the brake (10) connected to the ring gear (4) of the fourth planetary gear set brakes, the transmission ratio is -1.181, which corresponds to a third gear. When the brake (10) connected to the ring gear (3) of the third planetary gear set brakes, the transmission ratio is -1.533, which corresponds to a second gear. When the brake (10) connected to the ring gear (2) of the second planetary gear set brakes, the transmission ratio is -2.0, which corresponds to a first gear. When none of the three brakes brakes, the gearbox is in neutral. The gearbox controls the gear by controlling the braking of the three brakes. The pitches of the adjacent gears of the gearbox in this embodiment are approximately equal, and the deviation is less than 0.3%. The transmission structure is simple, the control structure is simple, and it can be used as a gearbox for a bicycle.

Embodiment 3: An example of a gearbox according to the present invention with five planetary gear sets having the same type of center gears (ring gears). The gearbox includes a planetary gear set, a planetary gear set structure, an input end, an output end and a locking end, and brakes.

The planetary gear set is as follows: this embodiment adopts five planetary gear sets having the same type of center gears (ring gears). Each planetary gear set is provided with a center gear and a planet carrier with a planetary gear. The center gears in the planetary gear sets are all ring gears, which are the same type of center gears. The number of planetary gear groups in the five planetary gear sets are all 4. The planetary gear is a shaft, and the planet carrier is a bearing.

The planetary gear set structure is a star-connected planetary gear set structure. Suppose Zq1 represents the number of teeth of the ring gear in a first planetary gear set, Zq2 represents the number of teeth of the ring gear in a second planetary gear set, Zq3 represents the number of teeth of the ring gear in a third planetary gear set, Zq4 represents the number of teeth of the ring gear in a fourth planetary gear set, Zq5 represents the number of teeth of the ring gear in a fifth planetary gear set, X1 represents the number of teeth of the planetary gear in the first planetary gear set, X2 represents the number of teeth of the planetary gear in the second planetary gear set, X3 represents the number of teeth of the planetary gear in the third planetary gear set, X4 represents the number of teeth of the planetary gear in the fourth planetary gear set, and X5 represents the number of teeth of the planetary gear in the fifth planetary gear set. The number of gear teeth of the components in this embodiment is determined as: Zq1=80, Zq2=84, Zq3=68, Zq4=60, Zq5=76, X1=19, X2=19, X3=17, X4=16, and X5=24.

The input end, the output end and the locking end are as follows: a planet carrier (11) is used as the input end to connect to a power device. A ring gear (1) of the first planetary gear set is used as the output end to connect to a powered device. A ring gear (2) of the second planetary gear set, a ring gear (3) of the third planetary gear set, a ring gear (4) of the fourth planetary gear set, and a ring gear (5) of the fifth planetary gear set are each used as a locking end to connect to a brake (12), as shown in FIG. 4.

The brakes are as follows: this embodiment adopts four brakes, each connected to a locking end. The brake is an electromagnetic brake and is controlled by a gear shift control device.

If a brake is controlled to brake, the center gear connected thereto will be locked, such that the rotation speed of the center gear is zero. If a brake is controlled not to brake, the center gear connected thereto will not be locked. When the brake (12) connected to the ring gear (5) of the fifth planetary gear set brakes, the transmission ratio is 4.034, which corresponds to a third gear. When the brake (12) connected to the ring gear (4) of the fourth planetary gear set brakes, the transmission ratio is 9.143, which corresponds to a second gear. When the brake (12) connected to the ring gear (3) of the third planetary gear set brakes, the transmission ratio is 20.0, which corresponds to a first gear. When the brake (12) connected to the ring gear (2) of the second planetary gear set brakes, the transmission ratio is -20.0, which corresponds to a reverse gear. When none of the four brakes brakes, the gearbox is in neutral. The gearbox controls the gear by controlling the braking of the four brakes. In this embodiment, pitches between adjacent gears of the gearbox with three forward gears and one reverse gear are approximately equal, and the deviation is less than 1.8%. The transmission structure is simple, and the control structure is simple, and it can be used as a gearbox for an automobile.

The gearbox in embodiment 3 may be connected in series with the gearbox in embodiment 2, like a main gearbox of a truck and an auxiliary gearbox being connected in series, forming a gearbox with nine forward gears and three reverse gears. The transmission ratios from the first forward gear to the ninth forward gear are: -40.0/-30.67/-23.63/-18.29/- 14.02/-10.80/-8.08/-6.19/-4.77, respectively. The transmission ratio range is 8.39. The transmission ratios from the first reverse gear to the third reverse gear are: 40.0/30.67/23.63, respectively. Pitches between adjacent gears are approximately equal and the deviation is less than 2.7%. It is a constant ratio gearbox. It controls the gear by controlling the braking of seven brakes and can be used as a gearbox for an automobile.

Embodiment 4: An example of a gearbox according to the present invention with six planetary gear sets having the same type of center gears (ring gears). The gearbox includes a planetary gear set, a planetary gear set structure, an input end, an output end and a locking end, and brakes.

The planetary gear set is as follows: this embodiment adopts six planetary gear sets having the same type of center gears (ring gears). Each planetary gear set is provided with a center gear and a planet carrier with a planetary gear. The center gears in the planetary gear sets are all ring gears, which are the same type of center gears. The number of planetary gear groups in the six planetary gear sets are all 4. The planetary gear is a shaft, and the planet carrier is a bearing.

The planetary gear set structure is a star-connected planetary gear set structure. Suppose Zq1 represents the number of teeth of the ring gear in a first planetary gear set, Zq2 represents the number of teeth of the ring gear in a second planetary gear set, Zq3 represents the number of teeth of the ring gear in a third planetary gear set, Zq4 represents the number of teeth of the ring gear in a fourth planetary gear set, Zq5 represents the number of teeth of the ring gear in the fifth planetary gear set, Zq6 represents the number of teeth of the ring gear in a sixth planetary gear set, X1 represents the number of teeth of the planetary gear in the first planetary gear set, X2 represents the number of teeth of the planetary gear in the second planetary gear set, X3 represents the number of teeth of the planetary gear in the third planetary gear set, X4 represents the number of teeth of the planetary gear in the fourth planetary gear set, X5 represents the number of teeth of the planetary gear in the fifth planetary gear set, and X6 represents the number of teeth of the planetary gear in the sixth planetary gear set. The number of gear teeth of the components in this embodiment is determined as: Zq1=82, Zq2=74, Zq3 =86, Zq4=82, Zq5=78, Zq6=78, X1=33, X2=23, X3=25, X4=22, X5=19, and X6= 17.

The input end, the output end and the locking end are as follows: a planet carrier (13) is used as the input end to connect to a power device. A ring gear (1) of the first planetary gear set is used as the output end to connect to a powered device. A ring gear (2) of the second planetary gear set, a ring gear (3) of the third planetary gear set, a ring gear (4) of the fourth planetary gear set, a ring gear (5) of the fifth planetary gear set, and a ring gear (6) of the sixth planetary gear set are each used as a locking end to connect to a brake (14), as shown in FIG. 5.

The brakes are as follows: this embodiment adopts five brakes, each connected to a locking end. The brake is an electromagnetic brake and is controlled by a gear shift control device.

If a brake is controlled to brake, the center gear connected thereto will be locked, such that the rotation speed of the center gear is zero. If a brake is controlled not to brake, the center gear connected thereto will not be locked. When the brake (14) connected to the ring gear (6) of the sixth planetary gear set brakes, the transmission ratio is -1.181, which corresponds to a fifth gear. When the brake (14) connected to the ring gear (5) of the fifth planetary gear set brakes, the transmission ratio is -1.533, which corresponds to a fourth gear. When the brake (14) connected to the ring gear (4) of the fourth planetary gear set brakes, the transmission ratio is -2.0, which corresponds to a third gear. When the brake (14) connected to the ring gear (3) of the third planetary gear set brakes, the transmission ratio is -2.602, which corresponds to a second gear. When the brake (14) connected to the ring gear (2) of the second planetary gear set brakes, the transmission ratio is -3.392, which corresponds to a first gear. When none of the five brakes brakes, the gearbox is in neutral. The gearbox controls the gear by controlling the braking of the five brakes. Pitches between adjacent gears of the five-gear gearbox in this embodiment are approximately equal, and the deviation is less than 0.3%. The transmission structure is simple, the control structure is simple, and it can be used as a gearbox for a bicycle.

Embodiment 5: An example of a gearbox according to the present invention with three planetary gear sets having the same type of center gears (sun gears). The gearbox includes a planetary gear set, a planetary gear set structure, an input end, an output end and a locking end, and brakes.

The planetary gear set is as follows: this embodiment adopts three planetary gear sets having the same type of center gears (sun gears). Each planetary gear set is provided with a center gear and a planet carrier with a planetary gear. The center gears in the planetary gear sets are all sun gears, which are the same type of center gears. The number of planetary gear groups in the three planetary gear sets is 4. The planetary gear is a shaft, and the planet carrier is a bearing. Note: If the planetary gear is changed to be a bearing and the planet carrier to a shaft, reference may be made to FIG. 7.

The planetary gear set structure is a star-connected planetary gear set structure. Suppose Zt1 represents the number of teeth of the sun gear in a first planetary gear set, Zt2 represents the number of teeth of the sun gear in a second planetary gear set, Zt3 represents the number of teeth of the sun gear in a third planetary gear set, X1 represents the number of teeth of the planetary gear in the first planetary gear set, X2 represents the number of teeth of the planetary gear in the second planetary gear set, and X3 represents the number of teeth of the planetary gear in the third planetary gear set. In this embodiment, the number of gear teeth of the components is determined as: Zt1=20, Zt2=28, Zt3=36, X1=17, X2=24, and X3=31.

The input end, the output end and the locking end are as follows: a planet carrier (7) is used as the input end to connect to a power device. A sun gear (1) of the first planetary gear set is used as the output end to connect to a powered device. A sun gear (2) of the second planetary gear set and a sun gear (3) of the third planetary gear set are each used as a locking end to connect to a brake (8). These connections are achieved through multi-layer quill shafts, as shown in FIG. 6.

The brakes are as follows: this embodiment adopts two brakes, each connected to a locking end. The brake is an electromagnetic brake and is controlled by a gear shift control device.

If a brake is controlled to brake, the center gear connected thereto will be locked, such that the rotation speed of the center gear is zero. If a brake is controlled not to brake, the center gear connected thereto will not be locked. When the brake (8) connected to the sun gear (3) of the third planetary gear set brakes, the transmission ratio is 77.5, which corresponds to a second gear. When the brake (8) connected to the sun gear (2) of the second planetary gear set brakes, the transmission ratio is 120.0, which corresponds to a first gear. When neither brake brakes, the gearbox is in neutral. The gearbox controls the gear by controlling the braking of the two brakes. The transmission ratios of the two gears of the gearbox in this embodiment are both very large, the transmission structure is simple, the control structure is simple, and it can be used as a main reducer and a gearbox of a helicopter.

Embodiment 6: An example of a gearbox according to the present invention with four planetary gear sets having the same type of center gears (sun gears). The gearbox includes a planetary gear set, a planetary gear set structure, an input end, an output end and a locking end, and brakes.

The planetary gear set is as follows: this embodiment adopts four planetary gear sets having the same type of center gears (sun gears). Each planetary gear set is provided with a center gear and a planet carrier with a planetary gear. The center gears in the planetary gear sets are all sun gears, which are the same type of center gears. The number of planetary gear groups in the four planetary gear sets is 4. The planetary gear is a shaft, and the planet carrier is a bearing.

The planetary gear set structure is a star-connected planetary gear set structure. Suppose Zt1 represents the number of teeth of the sun gear in a first planetary gear set, Zt2 represents the number of teeth of the sun gear in a second planetary gear set, Zt3 represents the number of teeth of the sun gear in a third planetary gear set, Zt4 represents the number of teeth of the sun gear in a fourth planetary gear set, X1 represents the number of teeth of the planetary gear in the first planetary gear set, X2 represents the number of teeth of the planetary gear in the second planetary gear set, X3 represents the number of teeth of the planetary gear in the third planetary gear set, and X4 represents the number of teeth of the planetary gear in the fourth planetary gear set. In this embodiment, the number of gear teeth of the components is determined as: Zt1=26, Zt2=34, Zt3=34, Zt4=50, X1=17, X2=23, X3=24, and X4=39.

The input end, the output end and the locking end are as follows: a planet carrier (9) is used as the input end to connect to a power device. A sun gear (1) of the first planetary gear set is used as the output end to connect to a powered device. A sun gear (2) of the second planetary gear set, a sun gear (3) of the third planetary gear set, and a sun gear (4) of the fourth planetary gear set are each used as a locking end to connect to a brake (10). These connections are achieved through multi-layer quill shafts, as shown in FIG. 8.

The brakes are as follows: this embodiment adopts three brakes, each connected to a locking end. The brake is an electromagnetic brake and is controlled by a gear shift control device.

If a brake is controlled to brake, the center gear connected thereto will be locked, such that the rotation speed of the center gear is zero. If a brake is controlled not to brake, the center gear connected thereto will not be locked. When the brake (10) connected to the sun gear (4) of the fourth planetary gear set brakes, the transmission ratio is 6.183, which corresponds to a third gear. When the brake (10) connected to the sun gear (3) of the third planetary gear set brakes, the transmission ratio is 13.565, which corresponds to a second gear. When the brake (10) connected to the sun gear (2) of the second planetary gear set brakes, the transmission ratio is 29.90, which corresponds to a first gear. When none of the three brakes brakes, the gearbox is in neutral. The gearbox controls the gear by controlling the braking of the three brakes. Pitches between adjacent gears of the gearbox in this embodiment are approximately equal, and the deviation is less than 0.24%. The transmission structure is simple, the control structure is simple, and it can be used as a gearbox for an electric vehicle. It is easy for each gear to form a large transmission ratio, and all gears are decelerated transmission, which is a major advantage of the gearbox according to the present invention.

Embodiment 7: An example of a gearbox according to the present invention with five planetary gear sets having the same type of center gears (sun gears). The gearbox includes a planetary gear set, a planetary gear set structure, an input end, an output end and a locking end, and brakes.

The planetary gear set is as follows: this embodiment adopts five planetary gear sets having the same type of center gears (sun gears). Each planetary gear set is provided with a center gear and a planet carrier with a planetary gear. The center gears in the planetary gear sets are all sun gears, which are the same type of center gears. The number of planetary gear groups in the five planetary gear sets is 4. The planetary gear is a shaft, and the planet carrier is a bearing.

The planetary gear set structure is a star-connected planetary gear set structure. Suppose Zt1 represents the number of teeth of the sun gear in a first planetary gear set, Zt2 represents the number of teeth of the sun gear in a second planetary gear set, Zt3 represents the number of teeth of the sun gear in a third planetary gear set, Zt4 represents the number of teeth of the sun gear in a fourth planetary gear set, Zt5 represents the number of teeth of the sun gear in a fifth planetary gear set, X1 represents the number of teeth of the planetary gear in the first planetary gear set, X2 represents the number of teeth of the planetary gear in the second planetary gear set, X3 represents the number of teeth of the planetary gear in the third planetary gear set, X4 represents the number of teeth of the planetary gear in the fourth planetary gear set, and X5 represents the number of teeth of the planetary gear in the fifth planetary gear set. In this embodiment, the number of gear teeth of the components is determined as: Zt1=26, Zt2 =34, Zt3=34, Zt4=50, Zt5=50, X1=17, X2=23, X3=24, X4=39, and X5=51.

The input end, the output end and the locking end are as follows: a planet carrier (11) is used as the input end to connect to a power device. A sun gear (1) of the first planetary gear set is used as the output end to connect to a powered device. A sun gear (2) of the second planetary gear set, a sun gear (3) of the third planetary gear set, a sun gear (4) of the fourth planetary gear set, and a sun gear (5) of the fifth planetary gear set are each used as a locking end to connect to a brake (12). These connections are achieved through multi-layer quill shafts, as shown in FIG. 9.

The brakes are as follows: this embodiment adopts four brakes, each connected to a locking end. The brake is an electromagnetic brake and is controlled by a gear shift control device.

If a brake is controlled to brake, the center gear connected thereto will be locked, such that the rotation speed of the center gear is zero. If a brake is controlled not to brake, the center gear connected thereto will not be locked. When the brake (12) connected to the sun gear (5) of the fifth planetary gear set brakes, the transmission ratio is 2.786, which corresponds to a fourth gear. When the brake (12) connected to the sun gear (4) of the fourth planetary gear set brakes, the transmission ratio is 6.183, which corresponds to a third gear. When the brake (12) connected to the sun gear (3) of the third planetary gear set brakes, the transmission ratio is 13.565, which corresponds to a second gear. When the brake (12) connected to the sun gear (2) of the second planetary gear set brakes, the transmission ratio is 29.90, which corresponds to a first gear. When none of the four brakes brakes, the gearbox is in neutral. The gearbox controls the gear by controlling the braking of the four brakes. Pitches between adjacent gears of the gearbox in this embodiment are approximately equal, and the deviation is less than 0.7%. The transmission structure is simple, the control structure is simple, and it can be used as a gearbox for a motor vehicle.

Embodiment 8: An example of a gearbox according to the present invention with six planetary gear sets having the same type of center gears (sun gears). The gearbox includes a planetary gear set, a planetary gear set structure, an input end, an output end and a locking end, and brakes.

The planetary gear set is as follows: this embodiment adopts six planetary gear sets having the same type of center gears (sun gears). Each planetary gear set is provided with a center gear and a planet carrier with a planetary gear. The center gears in the planetary gear sets are all sun gears, which are the same type of center gears. The number of planetary gear groups in the six planetary gear sets is 4. The planetary gear is a shaft, and the planet carrier is a bearing.

The planetary gear set structure is a star-connected planetary gear set structure. Suppose Zt1 represents the number of teeth of the sun gear in a first planetary gear set, Zt2 represents the number of teeth of the sun gear in a second planetary gear set, Zt3 represents the number of teeth of the sun gear in a third planetary gear set, Zt4 represents the number of teeth of the sun gear in a fourth planetary gear set, Zt5 represents the number of teeth of the sun gear in a fifth planetary gear set, Zt6 represents the number of teeth of the sun gear in a sixth planetary gear set, X1 represents the number of teeth of the planetary gear in the first planetary gear set, X2 represents the number of teeth of the planetary gear in the second planetary gear set, X3 represents the number of teeth of the planetary gear in the third planetary gear set, X4 represents the number of teeth of the planetary gear in the fourth planetary gear set, X5 represents the number of teeth of the planetary gear in the fifth planetary gear set, and X6 represents the number of teeth of the planetary gear in the sixth planetary gear set. In this embodiment, the number of gear teeth of the components is determined as: Zt1=26, Zt2=30, Zt3=34, Zt4=34, Zt5=50, Zt6=50, X1=17, X2= 19, X3=23, X4=24, X5=39, and X6= 51.

The input end, the output end and the locking end are as follows: a planet carrier (13) is used as the input end to connect to a power device. A sun gear (1) of the first planetary gear set is used as the output end to connect to a powered device. A sun gear (2) of the second planetary gear set, a sun gear (3) of the third planetary gear set, a sun gear (4) of the fourth planetary gear set, a sun gear (5) of the fifth planetary gear set, and a sun gear (6) of the sixth planetary gear set are each used as a locking end to connect to a brake (14). These connections are achieved through multi-layer quill shafts, as shown in FIG. 10.

The brakes are as follows: this embodiment adopts five brakes, each connected to a locking end. The brake is an electromagnetic brake and is controlled by a gear shift control device.

If a brake is controlled to brake, the center gear connected thereto will be locked, such that the rotation speed of the center gear is zero. If a brake is controlled not to brake, the center gear connected thereto will not be locked. When the brake (14) connected to the sun gear (6) of the sixth planetary gear set brakes, the transmission ratio is 2.786, which corresponds to a fourth gear. When the brake (14) connected to the sun gear (5) of the fifth planetary gear set brakes, the transmission ratio is 6.183, which corresponds to a third gear. When the brake (14) connected to the sun gear (4) of the fourth planetary gear set brakes, the transmission ratio is 13.565, which corresponds to a second gear. When the brake (14) connected to the sun gear (3) of the third planetary gear set brakes, the transmission ratio is 29.90, which corresponds to a first gear. When the brake (14) connected to the sun gear (2) of the second planetary gear set brakes, the transmission ratio is -30.875, which corresponds to a reverse gear. When none of the five brakes brakes, the gearbox is in neutral. The gearbox controls the gear by controlling the braking of the five brakes. In this embodiment, pitches between adjacent gears of the gearbox with four forward gears and one reverse gear are approximately equal, and the deviation is less than 0.7%. The transmission structure is simple, and the control structure is simple, and it can be used as a motor vehicle gearbox.

The basic principles, main features and advantages of the present invention have been shown and described above. Those skilled in the art should understand that the present invention is not limited by the above embodiments, and there are various changes and improvements to the present invention without departing from the spirit and scope of the present invention, and these changes and improvements all fall within the scope to be protected of the present invention. The scope of protection of the present invention is defined by the appended claims and equivalents.

## Claims

1. A gearbox with multiple planetary gear sets having the same type of center gears, comprising a planetary gear set, a planetary gear set structure, an input end, an output end and a locking end, and brakes, wherein at least three planetary gear sets having the same type of center gears are adopted, and each planetary gear set is an incomplete single-layer star planetary gear set and is provided with a center gear and a planet carrier with a planetary gear; all the center gears in the planetary gear sets are either sun gears or ring gears, and all the center gears in the gearbox are the same type of center gears; the planetary gear sets having the same type of center gears comprise a planetary gear set having the same type of center gears (sun gears) and a planetary gear set having the same type of center gears (ring gears), a planetary gear set having the same type of center gears all of which are sun gears is referred to as a planetary gear set having same type of center gears (sun gears), and a planetary gear having the same type of center gears all of which are ring gears is referred to as a planetary gear set having the same type of center gears (ring gears); a planetary gear set having the same type of center gears (sun gears) is selected to form a gearbox with a planetary gear set having the same type of center gears (sun gears), and a planetary gear set having the same type of center gears (ring gears) is selected to form a gearbox with a planetary gear set having the same type of center gears (ring gears);
the planetary gear set structure is a star-connected planetary gear set structure, in which for multiple single-layer star planetary gear sets, the number of planetary gear groups is set to be the same, the size of the planetary gear sets is adjusted until a distance between a planetary gear axis in each planetary gear set and a central axis of the planetary gear set is equal, each planetary gear in a planetary gear set is aligned with a planetary gear axis of an adjacent planetary gear set and they are connected in group, such a connection is referred to as a star connection, and such a planetary gear set structure is referred to as a star-connected planetary gear set structure;
the input end, the output end and the locking end are as follows: the planet carrier is used as the input end to connect to a power device, any of the center gears is used as the output end to connect to a powered device, and the remaining center gears are each used as a locking end to connect to a brake, and the brake is controlled by a gear shift control device; and
the brakes are as follows: at least two brakes are used as a controller of the gearbox, each connected to a locking end, and the brakes are controlled to be in any of a braking state, a half-braking state and a non-braking state.

2. The gearbox with multiple planetary gear sets having the same type of center gears according to claim 1, wherein a brake is controlled to brake such that the speed of the center gear connected thereto is zero; when the input end inputs a rotation speed, a brake is controlled to brake, the output end forms an output rotation speed which has a definite proportional relationship with the input rotation speed, and the gearbox forms a transmission ratio corresponding to a gear; when another brake is controlled to brake, the output end forms another output rotation speed which has another definite proportional relationship with the input rotation speed, and the gearbox forms another transmission ratio corresponding to another gear; and so on, the gearbox controls the gear by controlling the braking of the brakes; when a brake is controlled to brake half, the gearbox is in a half-linkage state in the corresponding gear; when the brakes are controlled to not brake, the gearbox is in neutral; and when two or more brakes are controlled to brake, the gearbox stops operating.

3. The gearbox with multiple planetary gear sets having the same type of center gears according to claim 1, wherein a reverse gearbox of the gearbox adopts the same planetary gear set, the same planetary gear set structure, the same brakes, but the input end, the output end and the locking end are changed as follows: the planet carrier is used as the output end to connect to a powered device, any of the center gears as the input end to connect to a power device, and the remaining center gears each as a locking end to connect to a brake; its operating characteristics remain unchanged; and the reverse gearbox of the gearbox also falls within the scope of protection of the present invention;
the planetary gear set is used as a gearbox and is not connected with any power and braking equipment, which is already explained.
